(19) **Europäisches Patentamt / European Patent Office / Office européen des brevets**

(11) **EP 3 730 642 B1**

(12) **EUROPEAN PATENT SPECIFICATION**

(45) Date of publication and mention
of the grant of the patent:
**30.03.2022 Bulletin 2022/13**

(21) Application number: **18891097.0**

(22) Date of filing: **30.11.2018**

(51) International Patent Classification (IPC):
**C22C 38/04** (2006.01)    **C22C 38/02** (2006.01)
**C22C 38/06** (2006.01)    **C22C 38/00** (2006.01)
**C21D 8/00** (2006.01)    **C21D 8/02** (2006.01)
**C21D 9/46** (2006.01)    C22C 38/12 (2006.01)
C22C 38/14 (2006.01)    C22C 38/16 (2006.01)

(52) Cooperative Patent Classification (CPC):
**C21D 8/02; C21D 8/00; C21D 9/46; C22C 38/02;
C22C 38/04; C22C 38/06;** C21D 2211/002;
C21D 2211/005; C21D 2211/008; C22C 38/12;
C22C 38/14; C22C 38/16

(86) International application number:
**PCT/KR2018/015029**

(87) International publication number:
**WO 2019/124809 (27.06.2019 Gazette 2019/26)**

(54) **STRUCTURAL STEEL HAVING EXCELLENT BRITTLE CRACK PROPAGATION RESISTANCE, AND MANUFACTURING METHOD THEREFOR**

STRUKTURSTAHL MIT HERVORRAGENDER SPRÖDRISSAUSBREITUNGSBESTÄNDIGKEIT UND VERFAHREN ZUR HERSTELLUNG DAVON

ACIER STRUCTURAL DOTÉ D'UNE EXCELLENTE RÉSISTANCE À LA PROPAGATION DE FISSURES FRAGILES ET PROCÉDÉ DE FABRICATION ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2017 KR 20170178930**

(43) Date of publication of application:
**28.10.2020 Bulletin 2020/44**

(73) Proprietor: **POSCO**
**Gyeongsangbuk-do 37859 (KR)**

(72) Inventors:
• **CHO, Jae-Young**
**Gwangyang-si, Jeollanam-do 57807 (KR)**

• **YI, Il-Cheol**
**Gwangyang-si, Jeollanam-do 57807 (KR)**
• **KANG, Sang-Deok**
**Gwangyang-si, Jeollanam-do 57807 (KR)**

(74) Representative: **Potter Clarkson**
**The Belgrave Centre**
**Talbot Street**
**Nottingham NG1 5GG (GB)**

(56) References cited:
**EP-A1- 0 709 480**    **EP-A1- 2 949 772**
**EP-A2- 0 589 424**    **JP-A- 2010 196 161**
**KR-A- 19990 053 985**    **KR-A- 20150 122 779**
**KR-A- 20170 140 415**    **KR-B1- 100 833 076**
**KR-B1- 101 253 958**

EP 3 730 642 B1

**Description**

[Technical Field]

The invention relates to a structural steel used in structures such as shipbuilding, architecture, offshore construction, line pipes, and the like and a manufacturing method therefor, and in particular, a structural steel effectively ensuring brittle crack propagation resistance by optimizing a steel composition, a microstructure, and a manufacturing process, and a manufacturing method therefor.

[Background Art]

Various structural materials used in shipbuilding, architecture, offshore construction, line pipes, and the like extend in usage environment to deep sea and polar regions, thus requiring high strength, thickening, and high toughness characteristics. However, in general, as a thickness of a steel sheet increases, performance of stopping propagation of brittle cracks decreases, and thus, a technique for improving the performance of stopping propagation of brittle cracks of high-strength thick steel sheets used in extreme environments is required.

Referring to a process of propagating brittle cracks in steel, it may be seen that brittle cracks occur at a systematically vulnerable center part and propagate. In the case of forming a fine structure on a steel sheet, it may be possible to slow down an occurrence and propagation of brittle cracks, but in the case of a thick plate, a sufficient effect cannot be expected in compacting the structure through cooling and rolling or the like due to a thickness of the thick steel sheet.

Patent document 1 proposes a technique for suppressing propagation of brittle cracks by grain-refining a surface part of a steel, but the surface part is mainly composed of equiaxed ferrite grains and elongated ferrite grains, and thus, the technique cannot be applied to a high-strength steel having a tensile strength of 570 MPa or higher. In addition, in Patent document 1, in order to grain-refine the surface part, a rolling process must be essentially performed in the middle of recuperating heat in the surface part, which makes it difficult to control the rolling process.

Patent document 2 discloses a shape steel material having high strength, high toughness and desirable fire resistance properties comprising by weight %, 0.04 to 0.20% of C, 0.05 to 0.50% of Si, 0.4 to 2.0% of Mn, 0.3 to 0.7% of Mo, 0.003 to 0.015% of N, 0.04 to 0.20% of V and less than 0.005% of Al to regulate [0%] to 0.003 to 0.015% by weight, titanium added to satisfy a requirement represented by the formula: -0.006 [Ti%] - 2[0%] 0.008 to crystallize a titanium-based oxide in an amount of 20 particles/mm2 or more, and MnS, TiN and V(C, N) deposited on the titanium-based oxide to disperse the titanium-based oxide as a composite precipitate in the steel to provide a cast slab, a high-strength high-toughness shape steel having an excellent fire resistance being provided by a combination of water cooling between rolling passes at the time of rolling with accelerated cooling after the completion of the rolling.

Patent document 3 discloses a process for producing a structural steel plate that is resistant to brittle crack propagation and improved in Charpy impact values without resort to the addition of costly allowing elements such as Ni. The plate comprises (by weight%) 0.04-0.30 % of C, at least 0.5 % of Si, at least 2.0 % of Mn, at least 0.1 % of Al, 0.001-0.10 % of Ti, 0.001- 0.01 % of N, and the balance consisting of Fe and unavoidable impurities, and has a texture in both the front and back layer parts thereof such that the average crystal grain diameter (d) is 3 $\mu$ al or less in the region with a depth of 2-33 % of the plate thickness and the Vickers hardness has a specified value.

(Patent document 1) Japanese Laid-Open Publication No. 2002-020835 (published on January 23, 2002)
(Patent document 2) EP 0589424 A2 (published on 30 March 1994)
(Patent document 3) EP 0709480 A1 (published on 1 May 1996)

[Disclosure]

[Technical Problem]

An aspect of the invention is to provide a structural steel which effectively ensures brittle crack propagation resistance by optimizing a steel composition, a microstructure, and a manufacturing process, and a manufacturing method therefor.

The technical problem of the invention is not limited to the above. Those skilled in the art will have no difficulty in understanding the additional technical problem of the invention from the general contents of this specification.

[Technical Solution]

The invention is as defined in the claims hereof.

[Advantageous Effects]

According to exemplary embodiments of the invention, since the structure of the surface part of the steel is refined by heat recuperation and the high angle grain boundary fraction of the surface part of the steel is increased by limiting a temperature of heat recuperation, the structural steel having effectively improved brittle crack propagation resistance and a manufacturing method therefor may be provided.

In addition, according to exemplary embodiments in the invention, the structural steel having improved brittle crack propagation resistance, while having a tensile strength of 570 MPa or higher, and a manufacturing method therefor may be provided by optimizing steel components, microstructures, and process conditions.

[Description of Drawings]

FIG. 1 is a photograph obtained by observing a microstructure of a specimen of a structural steel having excellent brittle crack propagation resistance according to an exemplary embodiment of the invention.

FIG. 2 is a view schematically showing an example of a facility for implementing a manufacturing method of the invention.

FIG. 3 is a conceptual view schematically showing changes in a microstructure of a surface part by heat recuperation of the invention.

FIG. 4 is a graph showing a relationship between a heat recuperation arrival temperature, a high angle grain boundary fraction, and a Kca value at -10°C.

[Best Mode]

The invention relates to a structural steel having excellent brittle crack propagation resistance and a manufacturing method therefor, which will be described below with reference to exemplary embodiments of the invention. The exemplary embodiments of the invention may be modified in various forms and the scope of the invention should not be construed as being limited to the exemplary embodiments described below. These exemplary embodiments are provided to describe the invention in more detail to those of ordinary skill in the art.

Hereinafter, a steel composition of the invention will be described in detail. Hereinafter, % is based on a weight representing the content of each element, unless otherwise specified.

Carbon (C): 0.02 to 0.12%

Carbon (C) is an important element to secure hardenability in the steel of the invention and is an element that significantly affects formation of an acicular ferrite structure. Therefore, in the invention, a lower limit of a carbon (C) content is 0.02% to obtain the effect. However, an excessive addition of carbon (C) may cause formation of pearlite instead of formation of the acicular ferrite, having a possibility of lowering low-temperature toughness, and thus, in the invention, an upper limit of the carbon (C) content is 0.12%. Therefore, the carbon (C) content in the invention is 0.02 to 0.12%. Furthermore, in the case of a plate material used as a welding structure, the range of the carbon (C) content may be limited to 0.03 to 0.09% in order to secure weldability.

Silicon (Si): 0.01 to 0.8%

Silicon (Si) is an element used as a deoxidizer and is also an element contributing to strength improvement and toughness improvement. Therefore, in order to obtain such effects, in the invention, a lower limit of a silicon (Si) content is 0.01%. However, an excessive addition of the content of silicon (Si) may reduce low-temperature toughness and weldability, and thus, in the invention, an upper limit of the silicon (Si) content is 0.8%. Therefore, the silicon (Si) content in the invention is 0.01 to 0.8%, and a more preferable silicon (Si) content may be 0.05 to 0.5%.

Manganese (Mn): 1.7 to 2.5%

Manganese (Mn) is an element useful for improving strength by solid solution strengthening and is also an element that may economically increase hardenability. Therefore, in order to obtain such effects, in the invention, a lower limit of the manganese (Mn) content is 1.7%. However, an excessive addition of the Mn content may significantly reduce toughness of a welded portion due to an increase in excessive hardenability, and thus, in the invention, an upper limit of the manganese (Mn) content is 2.5%. Therefore, the manganese (Mn) content in the invention is 1.7 to 2.5%, and a more preferable manganese (Mn) content may be 1.75 to 2.3%.

Aluminum (A1): 0.0005 to 0.5%

Aluminum (Al) is a typical deoxidizer which may economically deoxidize molten steel and is also an element contributing to strength improvement. Therefore, in order to achieve the effect, in the invention, a lower limit of the aluminum (Al) content is 0.0005%. However, an excessive addition of aluminum (Al) may cause clogging of a nozzle during continuous casting, and thus, in the invention, an upper limit of the aluminum (Al) content is 0.5%. Therefore, the aluminum (Al) content in the invention is 0.0005 to 0.5%, and a more preferable aluminum (Al) content may be 0.0005 to 0.1%.

Phosphorus (P): 0.02% or less

Phosphorus (P) is an element advantageous for strength improvement and corrosion resistance, but it is preferable to keep the content thereof as low as possible because phosphorus may significantly lower impact toughness. Therefore, the phosphorus (P) content in the invention may be 0.02% or less, and a more preferable phosphorus (P) content may be 0.015% or less.

Sulfur (S): 0.01% or less

Sulfur (S) is an element which forms a non-metallic inclusion such as MnS or the like to significantly hamper impact toughness, and thus, it is preferable to keep the content as low as possible. Therefore, the sulfur (S) content in the invention is preferably limited to 0.01% or less. However, sulfur (S) is an impurity inevitably introduced in a steelmaking process, and it is not preferable to control the sulfur (S) to a level of less than 0.001% economically. Therefore, a preferred sulfur (S) content in the invention may be in the range of 0.001 to 0.01%.

Niobium(Nb): 0.005 to 0.1%

Niobium (Nb) is one of the elements that play the most important role in a production of TMCP steel and is also an element precipitated in the form of carbide or nitride to significantly contribute to improving strength of a base material and the welded portion. In addition, niobium (Nb) dissolved during reheating of a slab suppresses recrystallization of austenite and suppresses transformation of ferrite and bainite to refine a structure. In the invention, niobium (Nb) may be added in an amount of 0.005% or greater. However, an excessive addition of niobium (Nb) may form coarse precipitates to cause brittle cracks at corners of the steel, and thus, the niobium (Nb) content may be limited to 0.1% or less. Therefore, the niobium (Nb) content in the invention may be in the range of 0.005 to 0.1%, and a more preferable niobium (Nb) content may be in the range of 0.005 to 0.05%.

Boron (B): 0.001% or less

Boron (B) is an inexpensive additional element but is also a beneficial element that may effectively increase hardenability even with a small amount of addition. However, the invention aims to form an acicular ferrite structure at the center, but an excessive addition of the content of boron (B) may significantly contribute to formation of bainite to make it impossible to form a dense acicular ferrite structure. Therefore, in the invention, an upper limit of the boron (B) content may be 0.001%.

Titanium (Ti): 0.005 to 0.1%

Titanium (Ti) is an element that significantly suppresses growth of crystal grains at the time of reheating, thereby significantly improving low-temperature toughness. Therefore, in order to obtain such effects, in the invention, a lower limit of the titanium (Ti) content may be 0.005%. However, an excessive addition of titanium (Ti) may cause a problem such as clogging of a nozzle in continuous casting or a reduction of low-temperature toughness due to crystallization of the center part, and thus, in the invention, an upper limit of the titanium (Ti) content may be 0.1%. Therefore, the titanium (Ti) content in the invention may be 0.005 to 0.1%, and a more preferable titanium (Ti) content may be 0.005 to 0.05%.

Nitrogen (N): 0.0015 to 0.015%

Nitrogen (N) is an element that contributes to strength improvement of the steel. However, an excessive addition of the nitrogen (N) content may significantly reduce toughness of the steel, and thus, in the invention, the nitrogen (N) content may be limited to 0.015% or less. However, nitrogen (N) is an impurity inevitably introduced in the steelmaking process and it is not preferable to control the nitrogen (N) content to a level of less than 0.0015% economically. Therefore, the nitrogen (N) content in the invention may be 0.0015 to 0.015%.

Chromium (Cr): 0.05 to 1.0%

Chromium (Cr) is an element that effectively contributes to an increase in strength by increasing hardenability, and thus, in the invention, chromium (Cr) of 0.05% or greater may be added to ensure strength. However, an excessive addition of chromium (Cr) may significantly reduce weldability, and thus, in the invention, an upper limit of the chromium (Cr) content may be 1.0%. Therefore, the chromium (Cr) content in the invention may be in the range of 0.05 to 1.0%, and a more preferable chromium (Cr) content may be 0.05 to 0.5%.

Molybdenum (Mo): 0.01 to 1.0%

Molybdenum (Mo) is an element capable of significantly improving hardenability even with a small amount of addition and suppressing formation of ferrite and thereby significantly improving strength of steel. Therefore, molybdenum (Mo) may be added in an amount of 0.01% or more in terms of ensuring strength. However, an excessive addition of the molybdenum (Mo) content may excessively increase hardness of the welded portion and hinder toughness of the base material, and thus, in the invention, an upper limit of the molybdenum (Mo) content may be 1.0%. Therefore, the molybdenum (Mo) content in the invention may be in the range of 0.01 to 1.0% and a more preferable molybdenum (Mo) content may be 0.01 to 0.5%.

Nickel (Ni): 0.01 to 2.0%

Nickel (Ni) is an element capable of improving both strength and toughness of a base material, and thus, in the invention, 0.01% or more of nickel (Ni) may be added to ensure strength and toughness. However, nickel (Ni) is an expensive element and an excessive addition thereof is not desirable from the economical point of view and an excessive nickel (Ni) content may degrade weldability, and thus, in the invention, an upper limit of the nickel (Ni) content may be 2.0%. Therefore, the nickel (Ni) content in the invention may be in the range of 0.01 to 2.0%, and a more preferable nickel (Ni) content may be in the range of 0.01 to 1.0%.

Copper (Cu): 0.01 to 1.0%

Copper (Cu) is an element capable of increasing strength while minimizing deterioration of toughness of the base material. Therefore, in the invention, 0.01% or more of copper (Cu) may be added to ensure strength. However, an excessive addition of copper (Cu) may increase a possibility of lowering quality of a surface of a final product, and thus, in the invention, an upper limit of the copper (Cu) content may be 1.0%. Therefore, the copper (Cu) content in the invention may be 0.01 to 1.0%, and a more preferable copper (Cu) content may be 0.01 to 0.5%.

Vanadium (V): 0.005 to 0.3%

Vanadium (V) has a low solution temperature compared to other alloy compositions and precipitated at a welding heat affecting portion to prevent lowering of strength of a welded portion. Thus, in order to obtain such effects, in the invention, a lower limit of the vanadium (V) content may be 0.005%. However, an excessive addition of vanadium (V) may lower toughness, and thus, in the invention, an upper limit of the vanadium (V) content may be 0.3%. Therefore, the vanadium (V) content in the invention may be 0.005 to 0.3%, and a more preferable vanadium (V) content may be 0.01 to 0.3%.

Calcium (Ca): 0.006% or less

Calcium (Ca) is mainly used as an element that controls a shape of a non-metallic inclusion, such as MnS or the like and improves low-temperature toughness. However, an excessive addition of calcium (Ca) may cause formation of a large amount of CaO-CaS and formation of coarse inclusion, which may lower cleanliness of the steel and weldability in the field. Therefore, in the invention, an upper limit of the calcium (Ca) content may be 0.006%, and a more preferable upper limit of the calcium (Ca) content may be 0.003%.

In the invention, the balance other than the steel composition is Fe and inevitable impurities. The inevitable impurities, which may be unintentionally incorporated in a general steel manufacturing process, cannot be completely excluded, which may be easily understood by those skilled in the general steel manufacturing field.

A thickness of the structural steel having excellent brittle crack propagation resistance according to an aspect of the invention is not particularly limited and may preferably be a thick structural steel having a thickness of 50 mm or greater.

Hereinafter, limiting conditions of an Mn equivalent of the invention will be described in detail.

Limiting Conditions of Mn Equivalent

In the steel composition of the invention, the Mn equivalent represented by $Mn_{eq}$ in Equation 1 below should satisfy 2% or more.

$$[Equation \qquad\qquad 1]$$

$$Mn_{eq} = [Mn] + 1.5[Cr] + 3[Mo] + [Si]/3 + [Ni]/3 + [Cu]/2 + 124[B]$$

However, [Mn], [Cr], [Mo], [Si], [Ni], [Cu], and [B] in Equation 1 refer to contents of Mn, Cr, Mo, Si, Ni, Cu, and B, respectively, and may be 0 if the corresponding element is not included.

As described below, the invention aims to form a lath bainite structure on the surface part by performing the first cooling on the roughly rolled steel after the end of rough rolling, and the Mn equivalent of 2% or more corresponds to necessary conditions for forming the lath bainite structure on the surface part by first cooling. If the Mn equivalent is less than 2%, hardenability is not ensured and a polygonal ferrite or a granular bainite structure other than the lath bainite structure is formed on the surface part even by the first cooling. Therefore, in the invention, preferably, the steel composition content is limited so that the Mn equivalent represented by $Mn_{eq}$ in Equation 1 satisfies 2% or more.

Hereinafter, a microstructure of the invention will be described in detail.

Microstructure

The steel of the invention is divided into a surface part and a center part along a thickness direction, and the surface part and the center part are microstructurally distinguished from each other. The surface part is divided into a first surface part on a first side of the steel and a second surface part on a second side of the steel, the center part being located between the first surface part and the second surface part and thicknesses of the first surface part and the second surface part may be 3 to 10% of the thickness of the steel. Preferably, the thicknesses of the first surface part and the second surface part may be 5 to 7% of the thickness of the steel.

The surface part is provided as a mixed structure including tempered bainite as a base structure, fresh martensite as a second structure, and austenite as a residual structure, and the center part is provided as a structure including acicular ferrite. Therefore, the surface part and the center part may be microstructurally distinguished from each other.

The sum of volume fractions of the tempered bainite structure and the fresh martensite structure in the surface part is 95% or more, and a volume fraction of residual austenite in the surface part may be 5% or less. In addition, the volume fraction of the tempered bainite structure in the surface part may be 85% or more and the volume fraction of fresh martensite structure may be 10% or less. In addition, the sum of the volume fractions of the tempered bainite structure and fresh martensite structure in the surface part may be 100%, in which case residual austenite may not be present in the surface part.

The center part includes 95% or more of acicular ferrite.

In the steel of the invention, the surface part is refined by heat recuperation, and thus, an acicular ferrite structure at the center part of a final product may have an average particle size of 10 to 20 $\mu$m level, while the tempered bainite structure and the fresh martensite structure of the surface part may be provided as fine structures each having an average particle diameter of 3 $\mu$m or less.

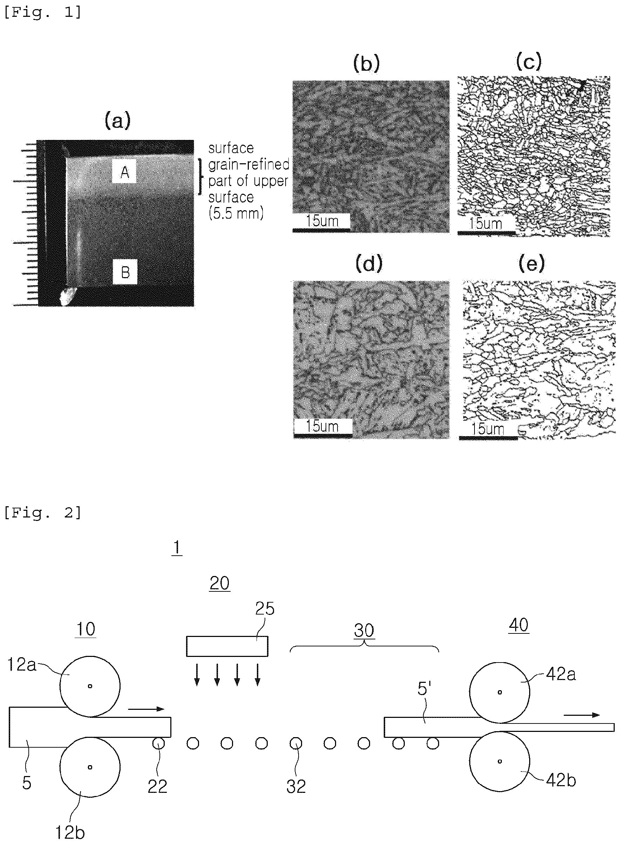

FIG. 1 is a photograph obtained by observing a microstructure of a specimen according to an exemplary embodiment in the invention. Specifically, FIG. 1-(a) is a photograph of a surface part A and a center part B divided on the specimen, FIG. 1-(b) is an optical photograph of the surface part A region, FIG. 1-(c) shows a high angle grain boundary map photographed using electron back scattering diffraction (EBSD) for the surface part A region, FIG. 1-(d) is an optical photograph of the center part B region, and FIG. 1-(e) shows a high angle grain boundary map photographed using EBSD for the center part B region. As shown in FIG. 1-(a), the surface part A and the center part B are microstructurally distinguished from each other, so that a boundary therebetween is also discernible with the naked eye. In addition, as shown in FIG. 1-(b) to FIG. 1-(e), an average particle diameter of the acicular ferrite structure of the center part B is about 15 $\mu$m, while an average particle diameter of each of the tempered bainite structure and the fresh martensite structure of the surface part A is 3 $\mu$m or less. Therefore, the steel according to an exemplary embodiment in the invention may have effectively improved brittle crack propagation resistance by microstructuring the surface part of the steel through heat recuperation.

In the steel according to the invention, the surface part is microstructurally altered by heat recuperation, and thus, a Kca value of the surface part with respect to -10°C in a temperature gradient ESSO test is 6000 N/mm$^{3/2}$ or higher and a high angle grain boundary fraction of the surface part may be 45% or greater. In addition, since the steel according to one aspect of the invention has a tensile strength of 570 MPa or greater, a high-strength steel having excellent brittle crack propagation resistance may be provided.

The structural steel having excellent brittle crack propagation resistance according to an aspect of the invention is manufactured by reheating a slab provided with the afore-mentioned composition; rough rolling the slab; first cooling the rough rolled steel; recuperating heat in the steel by maintaining a surface part of the first-cooled steel to be reheated by heat recuperation; finish rolling the heat-recuperated steel; and second cooling the finish rolled steel. The reason for limiting the composition of the slab corresponds to the reason for limiting the steel composition described above, and thus, the reason for limiting the composition of the slab is replaced by the reason for limiting the steel composition described above.

Hereinafter, a manufacturing method of the invention will be described in detail.

**Slab Reheating**

The reheating temperature of the slab is limited to 1050°C or higher to sufficiently dissolve the carbonitrides of Ti and Nb formed during casting. However, if the reheating temperature is excessively high, austenite may become coarse and it takes an excessive time for the temperature of the surface part of the steel to reach a first cooling starting temperature after rough rolling, so an upper limit of the reheating temperature is 1250°C.

**Rough Rolling**

Rough rolling is performed after reheating to adjust a shape of the slab and to destroy a casting structure such as dendrites. In order to control the microstructure, rough rolling is performed at a temperature Tnr or higher at which austenite recrystallization stops, and an upper limit of the temperature of the rough rolling is limited to 1150°C in consideration of the first cooling starting temperature. Therefore, the temperature of rough rolling of the invention ranges from Tnr to 1150°C.

**First Cooling**

After the end of rough rolling, first cooling is performed until the temperature of the surface part reaches the range of Ms to Bs°C in order to form lath bainite at the surface part of the steel. If a cooling rate of the first cooling is less than 5°C/s, a polygonal ferrite or granular bainite structure other than the lath bainite structure may be formed on the surface part, and thus, the cooling rate of the first cooling is 5°C/s or higher. Further, the first cooling method is not particularly limited but water cooling is preferred from the viewpoint of cooling efficiency. Meanwhile, if the starting temperature of the first cooling is too high, there is a possibility that the lath bainite structure formed on the surface part may become coarse by the first cooling, and thus, the starting temperature of the first cooling is preferably limited to $Ae_3+100$°C or lower.

In order to maximize the effect of heat recuperation, the first cooling of the invention is preferably performed immediately after rough rolling. FIG. 2 is a view schematically showing an example of a facility 1 for implementing a manufacturing method of the invention. A rough rolling device 10, a cooling device 20, a heat recuperator 30, and a finish rolling device 40 are sequentially arranged along a movement path of a slab 5, and the rough rolling device 10 and the finish rolling device 40 include rough rolling rollers 12a and 12b and finish rolling rollers 42a and 42b, respectively, to perform rolling on the slab 5. The cooling device 20 may include a bar cooler 25 for spraying cooling water and an auxiliary roller 22 for guiding movement of the rough rolled slab 5. The bar cooler 25 is preferably disposed in an immediate rear of the rough rolling device 10 in terms of maximizing a heat recuperation effect. The heat recuperator 30 is disposed at a rear of the cooling device 20, and the rough rolled slab 5 may be heat-recuperated while moving along an auxiliary roller 32. A heat-recuperated slab 5' may be moved to the finish rolling device 40 to be finish rolled. Such a facility 1 is merely an example of a facility for carrying out the method of the invention, and the invention should not be interpreted as being limited to the facility shown in FIG. 2.

**Heat Recuperation**

After the first cooling, heat recuperation is performed to allow the surface part of the steel to be reheated by high heat at the center part of the steel, and the heat recuperation is performed until a temperature of the surface of the steel reaches ($A_{c1}+40$°C) to ($A_{c3}-5$°C). By the heat recuperation, the lath bainite of the surface part may be transformed into fine tempered bainite and fresh martensite, and part of the lath bainite of the surface part may be reverse-transformed into austenite.

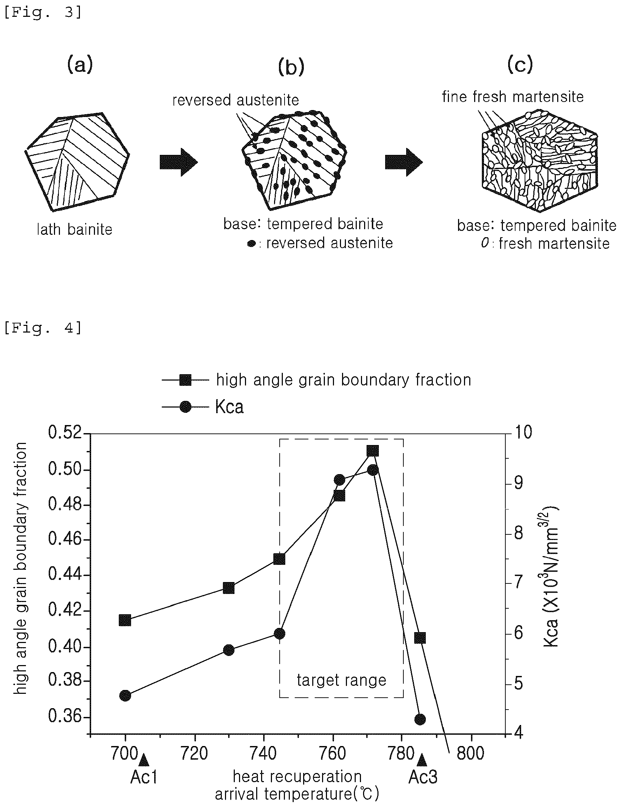

FIG. 3 is a conceptual view schematically showing changes in a microstructure of a surface part by heat recuperation forming part of the invention.

As shown in FIG. 3-(a), the microstructure of the surface part immediately after the first cooling may be provided as a lath bainite structure. As shown in FIG. 3-(b), as heat recuperation proceeds, the lath bainite of the surface part is transformed into a tempered bainite structure and part of the lath bainite of the surface part may be reverse-transformed into austenite. As the finish rolling and the second cooling are performed after the heat recuperation, as shown in FIG. 3(c), 2-phase mixed structure of the tempered bainite base structure and the fresh martensite may be formed and part of the austenite structure may remain.

A relationship between a heat recuperation arrival temperature, the high angle grain boundary fraction, and the Kca value at -10°C is as shown in FIG. 4. As shown in FIG. 4, it can be seen that when the arrival temperature of the surface is lower than ($AC_1$+40°C), the high angle grain boundary of 15 degrees or more is not sufficiently formed and the Kca value at -10°C is not sufficiently secured. Therefore, in the invention, a lower limit of the heat recuperation arrival temperature of the surface is limited to ($Ac_1$+40°C). Also, if the surface arrival temperature exceeds ($Ac_3$-5°C), there is no significant advantage regarding a crack propagation rate and the structure of the surface part is likely to become coarse again, and thus, in the invention, an upper limit of the heat recuperation arrival temperature of the surface is limited to ($Ac_3$-5°C). That is, in the invention, by limiting the surface part arrival temperature to the temperature range of ($Ac_1$+40°C) to ($Ac_3$-5°C), microstructuring of the surface part, 45% or more of high angle grain boundary fraction of 15 degrees or more, and the Kca value of 6000N/mm$^{3/2}$ at -10°C may be ensured.

### Finish Rolling

In order to introduce a non-uniform microstructure into the austenitic structure of the rough rolled steel, finish rolling is performed. The finish rolling is carried out in a temperature range above a bainite transformation starting temperature Bs and below an austenite recrystallization temperature Tnr.

### Second Cooling

After the finish rolling terminates, cooling is performed at a cooling rate of 5°C/s or higher in order to form an acicular ferrite structure at the center part of the steel. The second cooling method is not particularly limited but water cooling is preferred from the viewpoint of cooling efficiency. If an arrival temperature of the second cooling exceeds Bs°C based on the steel, the structure of the acicular ferrite becomes coarse and an average particle diameter of the acicular ferrite may exceed 20 $\mu$m. In addition, if the arrival temperature of the second cooling is lower than Ms°C based on the steel, there may be a possibility that the steel becomes twisted, and thus, the arrival temperature of the second cooling is limited to Ms to Bs°C.

[Mode for Invention]

Hereinafter, the invention will be described in detail through examples. However, it is necessary to note that the exemplary embodiments described below are only intended to further illustrate the invention and are not intended to limit the scope of the invention.

The invention is only limited by the appended claims.

The listed Examples are not within the scope of the invention.

Slabs having the compositions of Table 1 below were prepared, and transformation temperatures and Mn equivalents of the slabs based on Table 1 were calculated and shown in Table 2.

[Table 1]

| Classification | C | Si | Mn | P | S | Al | Ni | Cu | Cr | Mo | Ti | Nb | V | B | Ca* | N* |
|---|---|---|---|---|---|---|---|---|---|---|---|---|---|---|---|---|
| Steel A | 0.07 | 0,15 | 1.9 | 0.009 | 0.004 | 0.028 | 0.45 | 0.1 | 0.24 | 0.02 | 0.015 | 0.02 | 0.10 | 0.0005 | 10 | 41 |
| Steel B | 0.062 | 0.18 | 1.75 | 0.001 | 0.004 | 0.027 | 0.1 | 0.03 | 0.06 | 0.03 | 0.013 | 0.03 | 0.05 | 0.003 | 15 | 35 |
| Steel C | 0.057 | 0.3 | 2.15 | 0.012 | 0.002 | 0.023 | 0.3 | 0.16 | 0.1 | 0.015 | 0.015 | 0.04 | 0.15 | 0.009 | 0 | 45 |
| Steel D | 0.078 | 0.45 | 2.1 | 0.013 | 0.003 | 0.035 | 0.43 | 0.15 | 0.46 | 0.2 | 0.019 | 0.04 | 0.05 | 0.01 | 4 | 41 |
| Steel E | 0.048 | 0.25 | 2.3 | 0.013 | 0.002 | 0.03 | 0.3 | 0.26 | 0.05 | 0.05 | 0.018 | 0.03 | 0.20 | 0.007 | 0 | 43 |
| Steel F | 0.015 | 0.21 | 1.5 | 0.014 | 0.002 | 0.035 |  | 0.1 | 0.06 | 0.03 | 0.12 | 0.03 | 0.1 | 0.008 | 3 | 38 |
| Steel G | 0.15 | 0.32 | 0.8 | 0.013 | 0.01 | 0.04 | 0.05 | 0.02 | 0.1 | 0.05 | 0.016 | 0.03 | 0.1 | 0.003 | 0 | 35 |
| Steel H | 0.08 | 0.42 | 1.22 | 0.011 | 0.003 | 0.24 | 0.2 | 0.05 | 0.15 | 005 | 0.012 | 0.04 | 0.02 | 0.002 | 10 | 32 |
| Steel I | 0.79 | 0.25 | 1.4 | 0.016 | 0.004 | 0.03 | 0.11 | 0.2 | 0.05 | 0.07 | 0.01 | 0.04 | 0.03 | 0.001 | 9 | 50 |
| Steel J | 0.07 | 0.12 | 1.70 | 0.008 | 0.004 | 0.026 | 0.1 | 0.02 | 0.05 | 0.015 | 0.017 | 0.03 | 0.05 | 0.002 | 8 | 42 |

The contents of alloy compositions of Table 1 is based on wt% but Ca* and N* are based on ppm.

[Table 2]

| Classification | Bs (°C) | Tnr (°C) | Ms (°C) | $A_{C3}$ (°C) | $A_{C1}$ (°C) | $Mn_{eq}$ (°C) | Remark |
|---|---|---|---|---|---|---|---|
| Steel A | 605 | 941 | 441 | 791 | 703 | 2.6 | Inventive steel |
| Steel B | 645 | 917 | 457 | 804 | 709 | 2.1 | Inventive steel |
| Steel C | 601 | 978 | 442 | 802 | 705 | 2.7 | Inventive steel |
| Steel D | 555 | 906 | 427 | 793 | 714 | 3.9 | Inventive steel |
| Steel E | 591 | 982 | 442 | 803 | 701 | 2.9 | Inventive steel |
| Steel F | 691 | 933 | 487 | 821 | 713 | 1.7 | Comparative steel |
| Steel G | 718 | 953 | 451 | 791 | 724 | 1.0 | Comparative steel |
| Steel H | 674 | 905 | 464 | 817 | 728 | 1.9 | Comparative steel |
| Steel I | 677 | 988 | 462 | 797 | 715 | 1.7 | Comparative steel |
| Steel J | 650 | 968 | 455 | 793 | 707 | 1.9 | Comparative steel |

The slabs having the compositions of Table 1 were subjected to rough rolling, first cooling and heat recuperation under the conditions of Table 3 below and subjected to finish rolling and second cooling under the conditions of Table 4. The results for the steels prepared under the conditions of Table 3 and Table 4 are shown in Table 5 below.

In Table 3 the first cooling rate applied in respect of the examples is 5°C/sec or higher.

For each steel, an average grain diameter, high angle grain boundary fraction, mechanical properties, and Charpy impact absorption energy and crack propagation rate at a 1/4 point of thickness at -40°C of the surface part and the center part (1/4 point of thickness) were measured. Among these, the high angle grain boundary fraction was measured in a 500mx500m region at 0.5m step size by electron back scattering diffraction (EBSD) method, a grain boundary map with a crystal orientation difference of 15 degrees or more with adjacent particles was created, and the average grain diameters and high angle grain boundary fractions were obtained. Average values of yield strength (YS) and tensile strength (TS) were obtained by testing tension of three specimens in a plate width direction. An average value of the Charpy impact absorption energy at - 40°C was obtained by collecting three specimens in a rolling direction at the 1/4 point of the thickness. In addition, crack resistance was tested by a standard ESSO test of a temperature gradient type (500 mm x 500 mm specimen collected from a steel sheet having an original thickness).

[Table 3]

| Classification | Condition for reheat and rough rolling | | | | Condition for first cooling | Condition for heat recuperation | Remark |
|---|---|---|---|---|---|---|---|
| | Thickness before rough rolling (mm) | Thickness after rough rolling (mm) | Reheat extraction temperature (°C) | Rough rolling termination temperature (°C) | First cooling termination surface temperature (°C) | Heat recuperation arrival surface temperature (°C) | |
| Steel A-1 | 254 | 80 | 1080 | 1000 | 545 | 777 | Recommended condition |
| Steel A-2 | 280 | 30 | 1075 | 980 | 521 | 774 | Recommended condition |
| Steel A-3 | 280 | 55 | 1100 | 995 | 461 | 772 | Recommended condition |
| Steel A-4 | 254 | 65 | 1110 | 1070 | 647 | 855 | Exceeding Heat recuperation temperature |

(continued)

| Classification | Condition for reheat and rough rolling | | | | Condition for first cooling | Condition for heat recuperation | Remark |
|---|---|---|---|---|---|---|---|
| | Thickness before rough rolling (mm) | Thickness after rough rolling (mm) | Reheat extraction temperature (°C) | Rough rolling termination temperature (°C) | First cooling termination surface temperature (°C) | Heat recuperation arrival surface temperature (°C) | |
| Steel A-5 | 245 | 35 | 1125 | 950 | 421 | 701 | Below heat recuperation temperature |
| Steel A-6 | 220 | 70 | 1050 | 1020 | 531 | 759 | Recommended condition |
| Steel B-1 | 285 | 85 | 1070 | 970 | 555 | 776 | Recommended condition |
| Steel B-2 | 280 | 40 | 1080 | 955 | 550 | 761 | Recommended condition |
| Steel B-3 | 220 | 55 | 1105 | 1035 | 546 | 774 | Recommended condition |
| Steel B-4 | 244 | 35 | 1100 | 1080 | 655 | 857 | Exceeding Heat recuperation temperature |
| Steel B-5 | 220 | 75 | 1075 | 990 | 435 | 710 | Below heat recuperation temperature |
| Steel C-1 | 254 | 90 | 1085 | 1000 | 555 | 779 | Recommended condition |
| Steel C-2 | 270 | 30 | 1065 | 990 | 530 | 777 | Recommended condition |
| Steel C-3 | 255 | 70 | 1110 | 1085 | 663 | 871 | Exceeding Heat recuperation temperature |
| Steel C-4 | 245 | 30 | 1060 | 980 | 420 | 723 | Below heat recuperation temperature |
| Steel C-5 | 250 | 45 | 1085 | 1030 | 480 | 780 | Recommended condition |
| Steel D-1 | 275 | 60 | 1080 | 980 | 515 | 769 | Recommended condition |
| Steel D-2 | 255 | 30 | 1070 | 990 | 480 | 754 | Recommended condition |
| Steel D-3 | 230 | 55 | 1100 | 1040 | 620 | 807 | Exceeding Heat recuperation temperature |
| Steel D-4 | 250 | 40 | 1020 | 950 | 410 | 703 | Below heat recuperation temperature |

(continued)

| Classification | Condition for reheat and rough rolling | | | | Condition for first cooling | Condition for heat recuperation | Remark |
|---|---|---|---|---|---|---|---|
| | Thickness before rough rolling (mm) | Thickness after rough rolling (mm) | Reheat extraction temperature (°C) | Rough rolling termination temperature (°C) | First cooling termination surface temperature (°C) | Heat recuperation arrival surface temperature (°C) | |
| Steel E-1 | 255 | 70 | 1085 | 985 | 563 | 771 | Recommended condition |
| Steel E-2 | 280 | 25 | 1075 | 990 | 515 | 780 | Recommended condition |
| Steel E-3 | 270 | 55 | 1110 | 990 | 525 | 776 | Recommended condition |
| Steel F-1 | 245 | 75 | 1090 | 1000 | 561 | 774 | Recommended condition |
| Steel G-1 | 255 | 60 | 1090 | 990 | 568 | 776 | Recommended condition |
| Steel H-1 | 280 | 55 | 1080 | 950 | 570 | 789 | Recommended condition |
| Steel I-1 | 285 | 70 | 1080 | 990 | 500 | 780 | Recommended condition |
| Steel J-1 | 280 | 75 | 1095 | 980 | 515 | 763 | Recommended condition |

[Table 4]

| Classification | Condition for finish rolling | Condition for second cooling | | Remark |
|---|---|---|---|---|
| | Finish rolling termination temperature (°C) | Second cooling rate (°C/sec) | Second cooling termination temperature (°C) | |
| Steel A-1 | 850 | 6 | 520 | Recommended condition |
| Steel A-2 | 855 | 18 | 590 | Recommended condition |
| Steel A-3 | 827 | 11 | 530 | Recommended condition |
| Steel A-4 | 895 | 8 | 550 | Recommended condition |
| Steel A-5 | 800 | 21 | 510 | Recommended condition |
| Steel A-6 | 870 | 7 | 630 | Above second cooling termination temperature |
| Steel B-1 | 860 | 7 | 510 | Recommended condition |
| Steel B-2 | 855 | 15 | 497 | Recommended condition |
| Steel B-3 | 845 | 13 | 535 | Recommended condition |
| Steel B-4 | 875 | 21 | 520 | Recommended condition |

(continued)

|  | Classification | Condition for finish rolling | Condition for second cooling | | Remark |
|---|---|---|---|---|---|
|  |  | Finish rolling termination | Second cooling rate | Second cooling termination |  |
|  |  | temperature (°C) | (°C/sec) | temperature (°C) |  |
|  | Steel B-5 | 830 | 9 | 550 | Recommended condition |
|  | Steel C-1 | 865 | 6 | 510 | Recommended condition |
|  | Steel C-2 | 845 | 24 | 480 | Recommended condition |
|  | Steel C-3 | 915 | 11 | 500 | Recommended condition |
|  | Steel C-4 | 835 | 26 | 450 | Recommended condition |
|  | Steel C-5 | 765 | 17 | 670 | Above second cooling termination temperature |
|  | Steel D-1 | 850 | 14 | 535 | Recommended condition |
|  | Steel D-2 | 855 | 27 | 535 | Recommended condition |
|  | Steel D-3 | 860 | 17 | 480 | Recommended condition |
|  | Steel D-4 | 825 | 14 | 490 | Recommended condition |
|  | Steel E-1 | 867 | 11 | 510 | Recommended condition |
|  | Steel E-2 | 875 | 29 | 530 | Recommended condition |
|  | Steel E-3 | 885 | 2 | 485 | Below second cooling rate |
|  | Steel F-1 | 865 | 7 | 550 | Recommended condition |
|  | Steel G-1 | 845 | 12 | 540 | Recommended condition |
|  | Steel H-1 | 875 | 13 | 590 | Recommended condition |
|  | Steel I-1 | 855 | 9 | 555 | Recommended condition |
|  | Steel J-1 | 852 | 14 | 535 | Recommended condition |

[Table 5]

| Classification | Average grain diameter | | Physical properties | | | | Crack resistance | Remark |
|---|---|---|---|---|---|---|---|---|
|  | Surface part (μm) | 1/4t point (μm) (t: thickness) | YS (MPa) | TS (MPa) | High angle gran boundary fraction (%) | 1/4t Charpy impact absorption energy (J, @-40°C) (t: thickness) | Kca value at -10°C (N/mm$^{3/2}$) (temperature gradient ESSO test result) |  |
| Steel A-1 | 2 | 13 | 504 | 654 | 49 | 345 | 8440 | IS |
| Steel A-2 | 2.1 | 9 | 498 | 650 | 48 | 340 | 8200 | IS |
| Steel A-3 | 2.1 | 12 | 500 | 645 | 48 | 335 | 8084 | IS |
| Steel A-4 | 10.1 | 14 | 575 | 693 | 39 | 320 | 3416 | CS |
| Steel A-5 | 5.6 | 8 | 535 | 653 | 42 | 355 | 5193 | CS |
| Steel A-6 | 2.6 | 24 | 410 | 550 | 46 | 90 | 7272 | CS |
| Steel B-1 | 2.3 | 11 | 501 | 656 | 47 | 330 | 7672 | IS |

(continued)

| Classification | Average grain diameter | | Physical properties | | | | Crack resistance | Remark |
|---|---|---|---|---|---|---|---|---|
| | Surface part ($\mu$m) | 1/4t point ($\mu$m) (t: thickness) | YS (MPa) | TS (MPa) | High angle gran boundary fraction (%) | 1/4t Charpy impact absorption energy (J, @-40°C) (t: thickness) | Kca value at -10°C (N/mm$^{3/2}$) (temperature gradient ESSO test result) | |
| Steel B-2 | 2.9 | 12 | 496 | 651 | 46 | 345 | 6823 | IS |
| Steel B-3 | 2.4 | 11 | 495 | 647 | 47 | 320 | 7547 | IS |
| Steel B-4 | 10.1 | 9 | 579 | 669 | 39 | 355 | 3416 | CS |
| Steel B-5 | 5.5 | 13 | 526 | 647 | 43 | 335 | 5246 | CS |
| Steel C-1 | 2.1 | 14 | 519 | 658 | 48 | 320 | 8001 | IS |
| Steel C-2 | 2.2 | 9 | 518 | 653 | 48 | 370 | 7854 | IS |
| Steel C-3 | 12.1 | 12 | 521 | 647 | 38 | 325 | 2790 | CS |
| Steel C-4 | 4.9 | 1 | 579 | 669 | 43 | 315 | 5571 | CS |
| Steel C-5 | 2.1 | 26 | 405 | 540 | 48 | 75 | 8051 | CS |
| Steel D-1 | 2.4 | 11 | 551 | 677 | 47 | 325 | 7616 | IS |
| Steel D-2 | 2.8 | 9 | 618 | 715 | 45 | 350 | 6662 | IS |
| Steel D-3 | 10.3 | 10 | 582 | 682 | 39 | 315 | 3363 | CS |
| Steel D-4 | 5.8 | 11 | 558 | 673 | 42 | 315 | 5109 | CS |
| Steel E-1 | 2.4 | 12 | 545 | 666 | 47 | 355 | 7530 | IS |
| Steel E-2 | 2.1 | 7 | 633 | 721 | 48 | 365 | 8059 | IS |
| Steel E-3 | 2.2 | 19 | 435 | 560 | 47 | 230 | 7806 | CS |
| Steel F-1 | 8.6 | 15 | 495 | 630 | 40 | 300 | 3937 | CS |
| Steel G-1 | 11.8 | 19 | 395 | 530 | 38 | 230 | 2894 | CS |
| Steel H-1 | 7.3 | 13 | 460 | 645 | 41 | 333 | 4458 | CS |
| Steel I-1 | 10.1 | 12 | 458 | 625 | 39 | 340 | 3416 | CS |
| Steel J-1 | 3.8 | 14 | 465 | 635 | 38 | 290 | 4031 | CS |
| * IS: Inventive Steel / ** CS: Comparative Steel | | | | | | | | |

Steels A, B, C, D, E, and J are steels that satisfy the steel composition content of the invention. Among them, it can be seen that steels A-1. A-2, A-3, B-1, B-2, B-3, C-1, C-2, D-1, D-2, E-1, E-2 that satisfy the process conditions of the invention are steels in which the high angle grain boundary fractions of the surface part are 45% or more, tensile strength is 570 MPa or more, Charpy impact absorption energy at -40°C is 320 J or more, and the Kca value at -10°C as a result of temperature gradient ESSO test is 6000 N/mm$^{3/2}$ or more.

It can be seen that steels A-4, B-4, C-3, and D-3 which satisfy the steel composition content of the invention but have a heat recuperation temperature exceeding the range of the invention are steels in which the high angle grain boundary fractions are all less than 45% and the Kca value at -10°C as a result of temperature gradient ESSO test is less than 6000 N/mm$^{3/2}$. This is because, as the surface part of the steel was heated to a temperature higher than a temperature range of an abnormal region heat treatment temperature section, the structure of the surface part was entirely reverse-transformed into austenite, and as a result, a final structure of the surface part was formed as a structure of lath bainite.

It can be seen that steels A-5, B-5, C-4, and D-4 which satisfy the steel composition content of the invention but whose heat recuperation temperature is less than the range of the invention are steels in which the high angle grain boundary fraction is less than 45% and the Kca value at -10°C as a result of temperature gradient ESSO test is less than 6000 N/mm$^{3/2}$. This is because, during the first cooling, the surface parts of the steels were excessively cooled, so that the reversed austenite structure in the surface part was not sufficiently formed.

It can be seen that, in the case of steel A-6 and steel C-5, the second cooling termination temperature exceeds the range of the invention, and steel E-3 has a second cooling rate below the range of the invention, so the tensile strengths of the steels were not sufficiently ensured.

It can be seen that steels F-1, G-1, H-1 and I-1 satisfy the process conditions of the invention but manganese equivalents defined by $Mn_{eq}$ are less than 2.0%, the high angle grain boundary fractions are all less than 45%, and the Kca values at -10°C as a result of temperature gradient ESSO test are less than 6000 N/mm$^{3/2}$. This is because the lath bainite structure was not secured in the surface part of the steels during the first cooling, and thus the surface part was not sufficiently grain-refined. In addition, steel J-1 satisfies the steel composition of the invention, but a manganese equivalent defined by $Mn_{eq}$ does not reach 2.0%, so that the high angle grain boundary fractions are all less than 45% and the Kca values at -10°C as a result of temperature gradient ESSO test are less than 6000 N/mm$^{3/2}$.

Therefore, it can be seen that the structural steel according to the invention has excellent brittle crack propagation resistance and has a tensile strength of 570 MPa or higher.

**Claims**

1. A structural steel having excellent brittle crack propagation resistance, the structural steel consisting of, by wt%, 0.02 to 0.12% of C, 0.01 to 0.8% of Si, 1.7 to 2.5% of Mn, 0.005 to 0.5% of Al, and optionally further including, by wt%, one or two or more of 0.02% or less of P, 0.01% or less of S, 0.005 to 0.10% of Nb, 0.001% or less of B, 0.005 to 0.1% of Ti, 0.0015 to 0.015% of N, 0.05 to 1.0% of Cr, 0.01 to 1.0% of Mo, 0.01 to 2.0% of Ni, 0.01 to 1.0% of Cu, 0.005 to 0.3% of V, and 0.006% or less of Ca and the balance of Fe and inevitable impurities, wherein a surface part and a center part thereof are microstructurally distinguished in a thickness direction, wherein the surface part includes tempered bainite as a basic structure, fresh martensite as a second structure, and austenite as a residual structure, the basic structure and the second structure being included in a volume fraction of 95% or greater in the surface part, wherein the center part includes, by volume fraction, 95% or more of acicular ferrite, wherein the steel has 2% or greater of a Mn equivalent represented by $Mn_{eq}$ of Equation 1 below:

$$[Equation \qquad\qquad 1]$$

$$Mn_{eq} = [Mn] + 1.5[Cr] + 3[Mo] + [Si]/3 + [Ni]/3 + [Cu]/2 + 124[B]$$

   wherein [Mn], [Cr], [Mo], [Si], [Ni], [Cu] and [B] refer to contents of Mn, Cr, Mo, Si, Ni, Cu, and B, respectively, and are 0 when the corresponding element is not included, wherein the surface part is divided into a first surface part and a second surface part, the center part being located between the first surface part and the second surface part and the first surface part and the second surface part each having a thickness of 3 to 10% of a thickness of the steel, wherein a tensile strength of the steel is 570MPa or greater, and a Kca value of the surface part based on -10°C in a temperature gradient ESSO test is 6000N/mm$^{3/2}$ or greater, and wherein a high angle grain boundary fraction of the surface part is 45% or greater.

2. The structural steel of claim 1, wherein the residual structure is included in the surface part at a volume fraction of 5% or less.

3. The structural steel of claim 1, wherein an average particle diameter of the tempered bainite is 3 $\mu$m or less (excluding 0 $\mu$m).

4. The structural steel of claim 1, wherein an average particle diameter of the fresh martensite is 3 $\mu$m or less (excluding 0 $\mu$m).

5. The structural steel of claim 1, wherein an average particle diameter of the acicular ferrite is 10 to 20 $\mu$m.

6. A method for manufacturing a structural steel having excellent brittle crack propagation resistance according to Claim 1, the method comprising:

   reheating a slab consisting of, by wt%, 0.02 to 0.12% of C, 0.01 to 0.8% of Si, 1.7 to 2.5% of Mn, 0.005 to 0.5% of Al, and optionally further including, by wt%, one or two or more of 0.02% or less of P, 0.01% or less of S, 0.005 to 0.10% of Nb, 0.001% or less of B, 0.005 to 0.1% of Ti, 0.0015 to 0.015% of N, 0.05 to 1.0% of Cr, 0.01 to 1.0% of Mo, 0.01 to 2.0% of Ni, 0.01 to 1.0% of Cu, 0.005 to 0.3% of V, and 0.006% or less of Ca, and the balance of Fe and inevitable impurities in a temperature range of 1050 to 1250°C,

wherein the slab has 2% or greater of an Mn equivalent represented by $Mn_{eq}$ of Equation 1 below:

[Equation 1]

$$Mn_{eq}=[Mn]+1.5[Cr]+3[Mo]+[Si]/3+[Ni]/3+[Cu]/2+124[B]$$

wherein [Mn], [Cr], [Mo], [Si], [Ni], [Cu] and [B] refer to contents of Mn, Cr, Mo, Si, Ni, Cu, and B, respectively, and are 0 when the corresponding element is not included;

rough rolling the slab at a temperature of Tnr to 1150°C;

first cooling the rough rolled steel to a temperature of Ms to Bs at a cooling rate of 5°C/s or higher, based on a temperature of the surface of the rough rolled steel;

heat recuperating the steel by maintaining the surface of the first-cooled steel to a temperature range of ($Ac_1$+40°C) to ($Ac_3$-5°C) by heat recuperation;

finish rolling the heat-recuperated steel at a temperature of Bs to Tnr°C; and

second cooling the finish rolled steel to a temperature range of Ms to Bs°C at a cooling rate of 5°C/s or higher, wherein the first cooling is performed immediately after the rough rolling.

**Patentansprüche**

1. Baustahl, der eine ausgezeichnete Beständigkeit gegen Sprödrissausbreitung aufweist, wobei der Baustahl in Gew.-% aus Folgendem besteht: 0,02 bis 0,12 % C, 0,01 bis 0,8 % Si, 1,7 bis 2,5 % Mn, 0,005 bis 0,5 % Al und optional ferner in Gew.-% eins oder zwei oder mehr von Folgenden einschließt: 0,02 % oder weniger P, 0,01 % oder weniger S, 0,005 bis 0,10 % Nb, 0,001 % oder weniger B, 0,005 bis 0,1 % Ti, 0,0015 bis 0,015 % N, 0,05 bis 1,0 % Cr, 0,01 bis 1,0 % Mo, 0,01 bis 2,0 % Ni, 0,01 bis 1,0 % Cu, 0,005 bis 0,3 % V und 0,006 % oder weniger Ca und den Rest von Fe und unvermeidlichen Verunreinigungen, wobei ein Oberflächenteil und ein Mittelteil davon in einer Dickenrichtung sich mikrostrukturell unterscheiden, wobei der Oberflächenteil angelassenen Bainit als eine Grundstruktur, frischen Martensit als eine zweite Struktur und Austenit als eine Reststruktur einschließt, wobei die Grundstruktur und die zweite Struktur in einem Volumenanteil von 95 % oder mehr in dem Oberflächenteil eingeschlossen sind, wobei der Mittelteil nach Volumenanteil 95 % oder mehr nadelförmigen Ferrit einschließt, wobei der Stahl 2 % oder mehr eines Mn-Äquivalents aufweist, das durch $Mn_{Äq}$ der nachstehenden Gleichung 1 dargestellt wird:

[Gleichung 1]

$$Mn_{Äq}=[Mn]+1,5[Cr]+3[Mo]+[Si]/3+[Ni]/3+[Cu]/2+124[B]$$

wobei [Mn], [Cr], [Mo], [Si], [Ni], [Cu] und [B] sich auf Gehalte von Mn, Cr, Mo, Si, Ni, Cu beziehungsweise B beziehen und 0 sind, wenn das entsprechende Element nicht eingeschlossen ist, wobei der Oberflächenteil in einen ersten Oberflächenteil und einen zweiten Oberflächenteil unterteilt ist, wobei sich der Mittelteil zwischen dem ersten Oberflächenteil und dem zweiten Oberflächenteil befindet und der erste Oberflächenteil und der zweite Oberflächenteil jeweils eine Dicke von 3 bis 10 % der Dicke des Stahls aufweisen, wobei eine Zugfestigkeit des Stahls 570 MPa oder mehr beträgt und ein Kca-Wert des Oberflächenteils basierend auf-10 °C in einem Temperaturgradienten-ESSO-Test 6000 N/mm$^{3/2}$ oder mehr beträgt und wobei ein Großwinkelkorngrenzenanteil des Oberflächenteils 45 % oder mehr beträgt.

2. Baustahl nach Anspruch 1, wobei die Reststruktur in dem Oberflächenteil mit einem Volumenanteil von 5 % oder weniger eingeschlossen ist.

3. Baustahl nach Anspruch 1, wobei ein durchschnittlicher Partikeldurchmesser des angelassenen Bainits 3 μm oder weniger (ausschließlich 0 μm) beträgt.

4. Baustahl nach Anspruch 1, wobei ein durchschnittlicher Partikeldurchmesser des frischen Martensits 3 μm oder weniger (ausschließlich 0 μm) beträgt.

**5.** Baustahl nach Anspruch 1, wobei ein durchschnittlicher Partikeldurchmesser des nadelförmigen Ferrits 10 bis 20 μm beträgt.

**6.** Verfahren zum Herstellen eines Baustahls, der eine ausgezeichnete Beständigkeit gegen Sprödrissausbreitung nach Anspruch 1 aufweist, wobei das Verfahren Folgendes umfasst:

Wiedererhitzen einer Bramme, die in Gew.-% aus Folgendem besteht: 0,02 bis 0,12 % C, 0,01 bis 0,8 % Si, 1,7 bis 2,5 % Mn, 0,005 bis 0,5 % Al und optional ferner in Gew.-% eins oder zwei oder mehr von Folgenden einschließt: 0,02 % oder weniger P, 0,01 % oder weniger S, 0,005 bis 0,10 % Nb, 0,001 % oder weniger B, 0,005 bis 0,1 % Ti, 0,0015 bis 0,015 % N, 0,05 bis 1,0 % Cr, 0,01 bis 1,0 % Mo, 0,01 bis 2,0 % Ni, 0,01 bis 1,0 % Cu, 0,005 bis 0,3 % V und 0,006 % oder weniger Ca und den Rest von Fe und unvermeidlichen Verunreinigungen in einem Temperaturbereich von 1050 bis 1250 °C,
wobei die Bramme 2 % oder mehr eines Mn-Äquivalents aufweist, das durch $Mn_{Äq}$ der nachstehenden Gleichung 1 dargestellt wird:

[Gleichung 1]

$$Mn_{Äq}=[Mn]+1,5[Cr]+3[Mo]+[Si]/3+[Ni]/3+[Cu]/2+124[B]$$

wobei [Mn], [Cr], [Mo], [Si], [Ni], [Cu] und [B] sich auf Gehalte von Mn, Cr, Mo, Si, Ni, Cu beziehungsweise B beziehen und 0 sind, wenn das entsprechende Element nicht eingeschlossen ist;
Vorwalzen der Bramme bei einer Temperatur von Tnr bis 1150 °C;
erstes Abkühlen des vorgewalzten Stahls auf eine Temperatur von Ms bis Bs mit einer Abkühlgeschwindigkeit von 5 °C/s oder höher, basierend auf einer Temperatur der Oberfläche des vorgewalzten Stahls;
Anwenden der Wärmerückgewinnung auf den Stahl durch Halten der Oberfläche des zuerst abgekühlten Stahls auf einem Temperaturbereich von ($Ac_1$+40 °C) bis ($Ac_3$-5 °C) durch Anwendung der Wärmerückgewinnung;
Fertigwalzen des Stahls, auf den die Wärmerückgewinnung angewendet wurde, bei einer Temperatur von Bs bis Tnr °C; und
zweites Abkühlen des fertiggewalzten Stahls auf einen Temperaturbereich von Ms bis Bs °C mit einer Abkühlgeschwindigkeit von 5 °C/s oder höher,
wobei das erste Abkühlen unmittelbar nach dem Vorwalzen durchgeführt wird.

**Revendications**

**1.** Acier de construction ayant une excellente résistance à la propagation des fissures fragiles, l'acier de construction étant constitué, en % en poids, de 0,02 à 0,12 % de C, de 0,01 à 0,8 % de Si, de 1,7 à 2,5 % de Mn, de 0,005 à 0,5 % d'Al, et éventuellement comportant en outre, en % en poids, un ou au moins deux de 0,02 % ou moins de P, 0,01 % ou moins de S, 0,005 à 0,10 % de Nb, 0,001 % ou moins de B, 0,005 à 0,1 % de Ti, 0,0015 à 0,015 % de N, 0,05 à 1,0 % de Cr, 0,01 à 1,0 % de Mo, 0,01 à 2,0 % de Ni, 0,01 à 1,0 % de Cu, 0,005 à 0,3 % de V et 0,006 % ou moins de Ca et le reste de Fe et d'impuretés inévitables, une partie de surface et une partie centrale de celuici étant distinguées de manière microstructurale dans le sens de l'épaisseur, la partie de surface comportant de la bainite revenue en tant que structure de base, de la martensite fraîche en tant que seconde structure et de l'austénite en tant que structure résiduelle, la structure de base et la seconde structure étant incluse dans une fraction volumique égale ou supérieure à 95 % dans la partie de surface, la partie centrale comportant, en fraction volumique, 95 % ou plus de ferrite aciculaire, l'acier ayant 2 % ou plus d'un équivalent Mn représenté par $Mn_{eq}$ de l'équation 1 cidessous :

[Équation 1]

$$Mn_{eq} = [Mn] + 1,5 [Cr] + 3 [Mo] + [Si] / 3 + [Ni] / 3 + [Cu] / 2 + 124 [B]$$

[Mn], [Cr], [Mo], [Si], [Ni], [Cu] et [B] désignant respectivement les teneurs en Mn, Cr, Mo, Si, Ni, Cu et B, et étant 0 lorsque l'élément correspondant n'est pas inclus, la partie de surface étant divisée en une première partie de surface et une seconde partie de surface, la partie centrale étant située entre la première partie de surface et la seconde partie de surface et la première partie de surface et la seconde partie de surface ayant chacune une épaisseur de 3 à 10 % d'une épaisseur de l'acier, une résistance à la traction de l'acier étant égale ou supérieure à 570 MPa, et une valeur Kca de la partie de surface basée sur -10 °C dans un essai ESSO à gradient de température étant égale ou supérieure à 6 000 N/mm$^{3/2}$, et une fraction de joint de grain à angle élevé de la partie de surface étant égale ou supérieure à 45 %.

2. Acier de construction selon la revendication 1, la structure résiduelle étant incluse dans la partie de surface à une fraction volumique égale ou inférieure à 5 %.

3. Acier de construction selon la revendication 1, un diamètre de particule moyen de la bainite revenue étant égal ou inférieur à 3 $\mu$m (à l'exclusion de 0 $\mu$m).

4. Acier de construction selon la revendication 1, un diamètre de particule moyen de la martensite fraîche étant égal ou inférieur à 3 $\mu$m (à l'exclusion de 0 $\mu$m).

5. Acier de construction selon la revendication 1, un diamètre de particule moyen de la ferrite aciculaire étant de 10 à 20 $\mu$m.

6. Procédé de fabrication d'un acier de construction ayant une excellente résistance à la propagation de fissures fragiles selon la revendication 1, le procédé comprenant :

le réchauffage d'une brame constituée, en % en poids, de 0,02 à 0,12 % de C, 0,01 à 0,8 % de Si, 1,7 à 2,5 % de Mn, 0,005 à 0,5 % d'Al, et éventuellement comportant en outre, en % en poids, un ou au moins deux de 0,02 % ou moins de P, 0,01 % ou moins de S, 0,005 à 0,10 % de Nb, 0,001 % ou moins de B, 0,005 à 0,1 % de Ti, 0,0015 à 0,015% de N, 0,05 à 1,0 % de Cr, 0,01 à 1,0 % de Mo, 0,01 à 2,0 % de Ni, 0,01 à 1,0 % de Cu, 0,005 à 0,3 % de V et 0,006 % ou moins de Ca, et le reste de Fe et d'impuretés inévitables dans une plage de températures de 1050 à 1250 °C,
la brame ayant 2 % ou plus d'un équivalent Mn représenté par Mn$_{eq}$ de l'équation 1 ci-dessous :

[Équation 1]

$$Mn_{eq} = [Mn] + 1,5\,[Cr] + 3\,[Mo] + [Si]\,/\,3 + [Ni]\,/\,3 + [Cu]\,/\,2 + 124\,[B]$$

[Mn], [Cr], [Mo], [Si], [Ni], [Cu] et [B] désignant respectivement les teneurs en Mn, Cr, Mo, Si, Ni, Cu et B, et étant 0 lorsque l'élément correspondant n'est pas inclus ;
le laminage brut de la brame à une température de Tnr à 1150 °C ;
un premier refroidissement de l'acier laminé brut à une température de Ms à Bs à une vitesse de refroidissement égale ou supérieure à 5 °C/s, sur la base d'une température de la surface de l'acier laminé brut ;
la récupération de chaleur de l'acier en maintenant la surface de l'acier premièrement refroidie à une plage de températures de (Ac$_1$ + 40 °C) à (Ac$_3$ - 5 °C) par récupération de chaleur ;
le fait de terminer le laminage de l'acier récupéré à une température de Bs à Tnr °C ; et
un second refroidissement de l'acier laminé fini à une plage de températures de Ms à Bs °C à une vitesse de refroidissement égale ou supérieure à 5 °C/s,
le premier refroidissement étant effectué immédiatement après le laminage brut.

[Fig. 1]

(a)

surface
grain-refined
part of upper
surface
(5.5 mm)

(b)

(c)

(d)

(e)

[Fig. 2]

[Fig. 3]

# (a)       (b)       (c)

reversed austenite

fine fresh martensite

lath bainite

base: tempered bainite
● : reversed austenite

base: tempered bainite
0 : fresh martensite

[Fig. 4]

—■— high angle grain boundary fraction
—●— Kca

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002020835 A
- EP 0589424 A2
- EP 0709480 A1